Europäisches Patentamt

European Patent Office

Office européen des brevets ·

(19)

(11) Publication number: **0 251 061**
**A2**

(12) # EUROPEAN PATENT APPLICATION

(21) Application number: **87108785.4**

(22) Date of filing: **19.06.87**

(51) Int. Cl.⁴: **H04N 9/43**

(30) Priority: **23.06.86 US 877534**

(43) Date of publication of application:
**07.01.88 Bulletin 88/01**

(84) Designated Contracting States:
**DE FR GB IT NL**

(71) Applicant: **NICOLET INSTRUMENT CORPORATION**
**5225-3 Verona Road**
**Madison Wisconsin 53711(US)**

(72) Inventor: **Mulvanny, Patrick**
**505 Clifden Drive**
**Madison Wisconsin 53711(US)**
Inventor: **Kap, Jaap**
**10 Winterset Circle**
**Madison Wisconsin 53717(US)**

(74) Representative: **Schwan, Gerhard, Dipl.-Ing.**
**Elfenstrasse 32**
**D-8000 München 83(DE)**

(54) **Hue and brightness correlated color topographic display apparatus.**

(57) Color topographic display apparatus for generating hue and brightness correlated color topographic displays of a body region, the electrical activity of the brain, for example. A matrix generator defines appropriately placed elements in a matrix, each of which represents a normalized data intensity value of the ensemble. All remaining elements of the matrix are determined by interpolation of the defined elements of the matrix. A color coder associates a color with each element of the interpolated matrix. A color coder generates color coded matrices of elements. A color represented by each element of each color coded matrix is representative of the data intensity value. The colors are selected from a sequence of colors from a color space having continuous hues and monotonically varying brightness. The matrices are displayed as topographic maps of the brain by a color display. In one preferred embodiment, the lowest data intensity value is represented by a color having a blue hue and low brightness. The highest data intensity value is represented by a white hue having a high brightness. Intermediate data intensity values are represented by colors having purple, red, orange, and yellow hues in order of increasing brightness.

Fig 3

# HUE AND BRIGHTNESS CORRELATED COLOR TOPOGRAPHIC DISPLAY APPARATUS

## BACKGROUND OF THE INVENTION

### 1. Field of the Invention.

The present invention relates to methods and devices for representing information on color displays. In particular, the present invention provides a hue and brightness correlated color key for the topographic display of information such as the electrical activity of the brain.

### 2. Description of the Prior Art.

Imaging displays are well known, and are often used in the field of medicine. Medical imaging displays allow visual interpretation of diagnostic information which would otherwise be tedious and difficult to analyze. Frequently, medical imaging displays are used to show the distribution of energy across a body region. The information portrayed by such distributions is known to be a useful diagnostic tool.

To minimize the potential for misdiagnosis, it is desirable to optimize image legibility. Also, observers must interpret images which may be changing rapidly in time (and in which structures may be represented by only subtle luminance differences) as well as recorded reproductions of these images.

Photographic or xerographic reproduction means are frequently used for recording monitor images. Comparison with other images make it desirable that the information content of recordable images survive the reproduction process. Optimizing image legibility, thus, comprehends images which are both dynamic and transient, and which are subject to static recording. Interpretation and reproduction can be easily done in monochrome with different shades of gray representing different intensity levels.

Color displays are considered more attractive than monochrome displays and are currently very popular. To display a distribution of activity as a color image, it is necessary to associate ranges of activity with particular colors. The color sequences used in typical prior art medical imaging devices are based on the wavelength spectrum. Such color sequences typically encode low activity by colors from the short-wavelength end of the spectrum (blue) and high activity by colors from the long-wavelength end of the spectrum (red). White is often used for the highest activity.

Wavelength is an unfortunate choice for representing magnitude or intensity information. It ignores the operation of the human visual system, does not lend itself to monochrome reproduction, and can create misinterpretations when used by color-deficient observers.

The hue and the brightness of a color are not independent quantities within the limited universe of display and hard copy images. Information explicitly encoded in the wavelength of a particular color tends to compete visually with information implicitly encoded in the luminance of that color. Middle wavelengths are processed by the human visual system more efficiently than either long or short wavelengths. Thus, a yellow region will be seen as more active than either a red or a blue region, because it appears brighter. Related difficulties arise when images are changing rapidly. Operators tend to confuse yellow with white, the color usually used to represent the greatest intensity. Again, the luminance of yellow overrides the information coded in its wavelength.

Other undesirable characteristics of wavelength spectrum displays affect observers suffering from anomalous color vision. Observers with anomalous color vision will tend to misinterpret wavelength spectrum displays because their color naming habits depend upon brightness discriminations that are misleading on such displays.

Wavelength spectrum displays are poor choices for photographic or xerographic image reproduction for the same reasons that they are poor for direct human viewing. Photocopying machines typically show a variation in efficiency with wavelength similar to that of the human visual system. When color images need to be represented in black and white, such as in conventional photocopying, failure to correlate hue and brightness causes confusion. Essentially, all relevant hue information is missing, and only incidental (and incorrect) brightness information remains. Even color reproductions may suffer content loss, since such reproductions rarely duplicate colors exactly. In either case, monochrome and color reproductions both pose the threat of introducing errors into subsequent analysis.

It is evident that there is a continuing need for improved color sequences. A color sequence having continuous hues and monotonically varying brightness would be desirable. A color sequence of this type could be used for rapid visual interpretation, and would be capable of reproduction in monochrome without substantial loss of information. Furthermore, such a color sequence would not pose interpretation problems for the majority of color anomalous observers. A color sequence of this type which could be adapted for use with commonly used red/green/blue (RGB) CRT monitors and hard-copy devices would be especially desirable.

## SUMMMARY OF THE INVENTION

The present invention is a color display apparatus in which a range of data values is associated with a sequence of colors with individual data values each being displayed by an associated color. The apparatus is characterized by a sequence of colors having continuous hue and monotonically varying brightness. Both hue and brightness are therefore correlated to represent the data being displayed. Displays produced by the apparatus can be rapidly interpreted. The displays can also be reproduced in monochrome without substantial loss of information and address problems of intrepretation by color-anomalous observers. The color sequence can also be easily implemented with a standard red/green/blue CRT color monitor or standard color hard-copy device.

In preferred embodiments, the color space is defined by the C.I.E. chromaticity diagram. Colors in the proposed sequence have hues approximating those along a downward extended black-body curve on the chromaticity diagram. These colors include white, which is preferably used to display data values of highest intensity, followed by yellow, orange, red, purple and blue which is used to represent the lowest data intensity values. In this manner, the present invention may be characterized as a "color-temperature" mapping technique. The common description of blues as psychologically "cool" and reds and yellows as pysychologically "warm" contributes to, but is not essential for the effectiveness of the technique.

## BRIEF DESCRIPTION OF THE DRAWINGS

Figure 1 is an illustration of a C.I.E. chromaticity diagram showing a downward extended black-body curve which defines a preferred sequence of color hues used in the present invention.

Figure 2 is a graphic representation of the relationship between normalized data intensity values, and the hue and brightness of colors used to represent the data intensity values.

Figure 3 is a block diagram representation of a color topographic mapping apparatus in which the hue and brightness correlated color sequence of the present invention is implemented.

Figure 4 is a graphic representation of a red/green/blue color cube and illustrating a trajectory which can be followed to produce a color sequence in accordance with the present invention.

Figure 5 is a representation of a preferred embodiment of the color coder shown in Figure 3 and illustrating how normalized data intensity values are translated to red/green/blue signals to the color display.

## DETAILED DESCRIPTION OF THE PREFERRED EMBODIMENTS

The present invention is a hue and brightness correlated topographic display apparatus. Electrical activity of the brain is measured at spaced-apart locations on the scalp. A range of intensity values of the monitored signals is associated with, or mapped, to a predetermined sequence of colors. Intensity of the electrical signals at the various locations are then represented by color, and displayed as a topographic map of the brain's activity.

The sequence of colors used to display data intensity values is unique in that the colors of the sequence have both continuous hue and monotonically varying brightness. The hues are continuous in the sense that they can be represented by an unbroken line in the C.I.E. chromaticity diagram or similar two-or three-dimensional representations of human visual color space. The brightness of the colors monotonically varies in the sense that there are no reversals in the brightness of the colors throughout the sequence. Both hue and brightness of the sequence of colors are therefore correlated with the range of data intensity values.

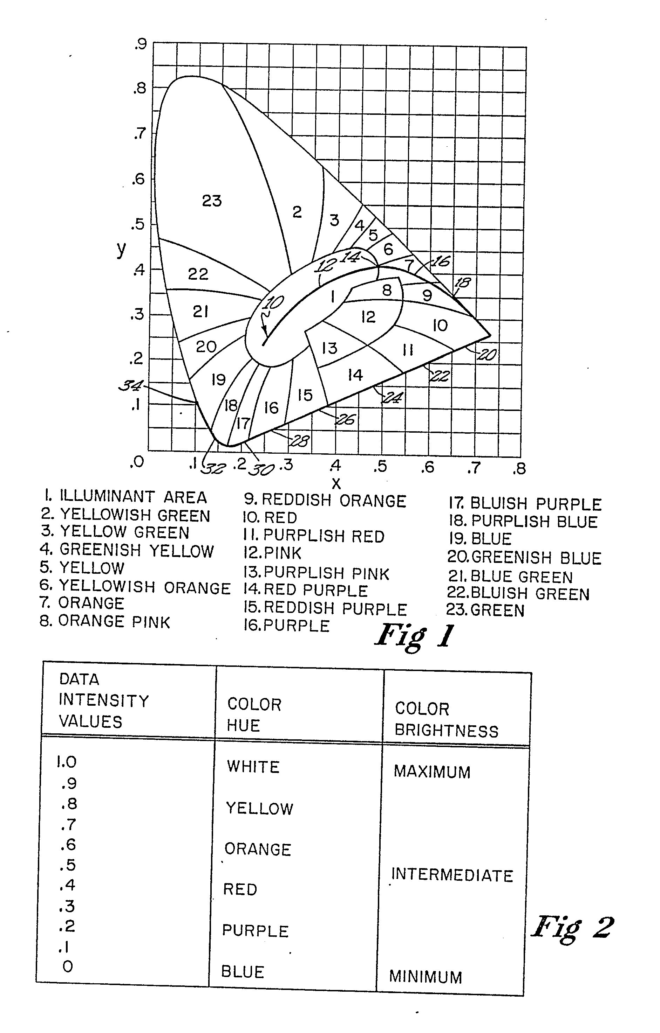

The C.I.E. chromaticity diagram which is illustrated in Figure 1. The C.I.E. chromaticity diagram is a universal device for representing hues of colors. Brightness of any three or more continuous hues illustrated on the C.I.E. chromaticity diagram are not necessarily monotonically varying. In a preferred embodiment of the present invention, the sequence of colors used to display data intensity values includes hues approximately those along a downward extended black-body curve 10 illustrated on the C.I.E. diagram in Figure 1. Black-body curve 10 defines the colors of a black body as it is heated from a temperature of approximately 1000°K to infinity. As shown in Figure 1, black-body curve 10 has a portion 12 which begins in the illuminant area of the C.I.E. chromaticity diagram. Black-body curve 10 continues with a portion 14 which passes through the yellowish orange section, a portion 16 passing through the orange section, and a section 18 which extends into the reddish orange section.

The sequence employed in the present invention is downwardly extended from the black body curve to include a portion 20 which passes through the red cube area, a portion 22 which passes through the purplish red area, a portion 24 which passes through the red purple area, and a portion 26 which passes through the reddish purple area. The downward extension from the black-body curve 10 continues still further with a portion 28 which passes through the purple area, a portion 30 which passes through the bluish purple area, a portion 32 which passes through the purplish blue area, and ends with a portion 34 in the blue area. Brightness of the colors along the black-body curve 10 and the illustrated downward extension decrease from a maximum brightness in the illuminant area to a minimum brightness at blue.

The correlation between data intensity values, hue and brightness, is graphically represented in Figure 2. A range of normalized data intensity values having a minimum value of zero and a maximum value of one are shown in relationship to the hue and brightness by which they are represented. As shown in Figure 2, the data intensity value of zero is represented by a blue hue having a minimum brightness. Increasing data intensity values are represented by corresponding hues purple, red, orange, yellow, and white which is used to represent a maximum data intensity value of one. The white hue has a maximum brightness. The hues of colors used to represent normalized data intensity values between zero and one have a brightness which is intermediate that of the minimum brightness of the blue hue used to represent a normalized data intensity value of zero, and the maximum brightness of the white hue used to represent a normalized data intensity value of 1.0. Brightness of colors used to represent data intensity value therefore increases with increasing data intensity values.

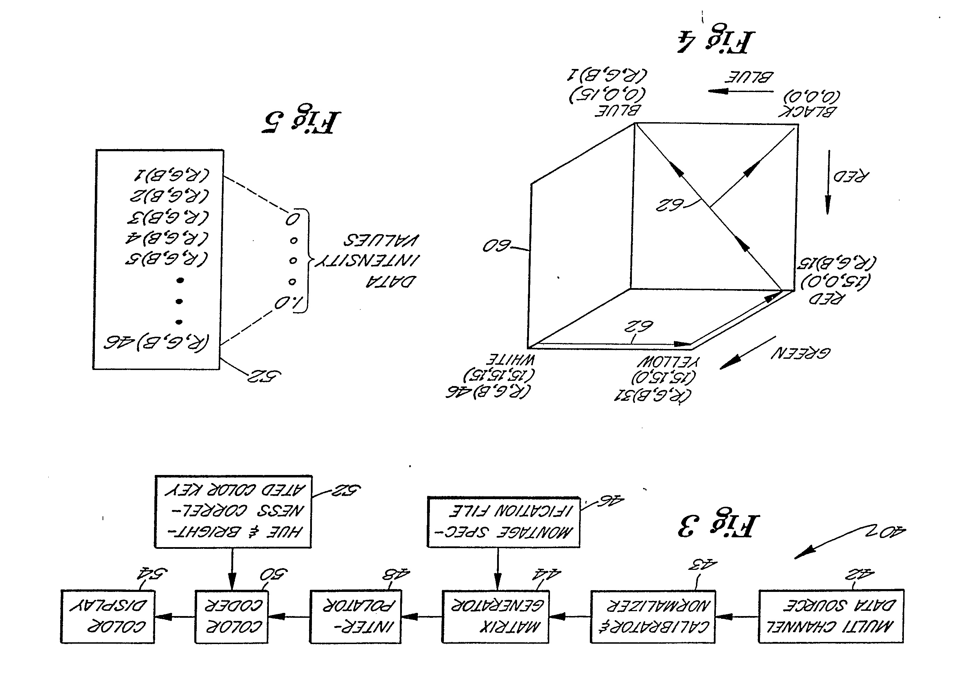

A color topographic display system 40 which utilizes the hue and brightness correlated color sequence of the present invention is illustrated generally in Figure 3. As shown in Figure 3, topographic display system 40 includes multi-channel data ensemble source 42, matrix generator 44 and associated montage specification file 46, interpolator 48, color coder 50 and associated color key 52, and display 54. Multi-channel data source 42 provides a plurality of channels of data. Each channel of data is representative of electrical activity of the brain as measured at a particular location on the human scalp. The channels of data are typically recorded in real time in response to sensory stimulation, and played back at any desired rate by multi-channel data source 42. Alternatively, multi-channel data source 42 can provide channels of data in real time as sensed from the patient. In one preferred embodiment, multi-channel data source 42 provides 16 channels of data.

Calibrator and normalizer 43 is connected to receive the channels of data provided by multi-channel data source 42. The ensemble of data intensity values is representative of electrical activity of the brain at spaced-apart locations at specific instances of time. The ensemble of data intensity values is then calibrated by calibrator and normalizer 43 to insure that the proper absolute data values are associated with proper colors by color key 52 for proper display by display 54. Additionally, each data value of the ensemble is normalized by translating its value into a pre-defined range of positive numbers (e.g., 0 to 1.0 a shown in Figure 2) which will be used as an input to color coder 50.

The calibrated and normalized ensemble of data intensity values provided by calibrator and normalizer 43 are applied to matrix generator 44. For each ensemble of data intensity values received from calibrator and normalizer 43, matrix generator 44 fills the appropriate elements of a matrix with the data intensity values. The elements are stored in such a manner so as to represent their proper spatial orientation for topographic display. The number, order, and spatial relationship of the elements of each matrix representing the data intensity values of an ensemble are specified by montage specification file 46.

Interpolator 48 is connected to receive the matrices produced by matrix generator 44. In response to each received matrix, interpolator 48 generates a completed matrix of elements representing a semi-continuous distribution of data intensity values over the scalp. In one preferred embodiment, each completed matrix is a 100 × 100 matrix of normalized data intensity values which are interpolated from the sixteen data intensity values provided by multi-channel data source 42. Instead of the sixteen values, there are now a field of ten thousand data intensity values describing the intensity distribution of electrical activity over the scalp. Linear rectangular or triangular interpolation methods are typically implemented by interpolator 48 and are known to the prior art.

Color coder 50 is connected to receive completed matrices produced by interpolator 48. Utilizing hue and brightness correlated color key 52, which characterizes the previously described sequence of colors of the present invention, color coder 50 translates each normalized data intensity value of each completed matrix element into a color code which will produce the appropriate color when the matrix is displayed by display 54. Color coder 50 and calibrator and normalizer 43 insures that the specific colors of each topographic display displayed on display 54 correspond with a defined range of intensities of the measured signals. Each color coded matrix produced by the color coder 50 is then applied to and displayed by display 54. Display 54 can be of any desired type including color cathode ray tube (CRT) or a color printer.

In one preferred embodiment, color display 54 comprises a color CRT monitor which produces colors in terms of additive red, green and blue (R, G, B) primaries. A multitude of colors can be produced by adding these primaries together in different proportions. A RGB color cube 60 is illustrated generally in Figure 4. As shown in Figure 4, the color white is produced by equal contributions of all three primaries. Yellow is produced by equal contributions of red and green primaries. Red is produced by a contribution of only the red primary. Similarly, blue is produced by contributing only the blue primary. Black is produced when there is no contribution from any of the primaries.

The preferred sequence of colors which approximates colors found along the downward extended black-body curve on the C.I.E. chromaticity diagram is well suited for production with a RGB color CRT display 54. A trajectory 62 describing those colors on color cube 60 is illustrated in Figure 4. In the embodiment shown, each of the red, green, and blue primaries can have one of sixteen distinct values ranging from zero (no contribution) to fifteen (maximum contribution). The contribution of the primary colors in terms of a (R, G, B) value for colors on the corners of the cube 60 are illustrated. In the upper right corner, all primaries contribute to the maximum (15, 15, 15) resulting in white. In the upper left corner, the red and green primaries contribute fully but blue not at all (15, 15, 0) resulting in yellow. Hues between white and yellow are therefore formed by decreasing the blue contribution to white. The trajectory indicated by line 62 and defining the color sequence of the present invention continues along color cube 60 from yellow to red by decreasing the green contribution to yellow. As shown, the color red is represented by RGB values (15, 0, 0). Finally, the trajectory continues from red to blue. Colors in between red and blue are formed by simultaneously decreasing the red contribution, and increasing the blue contribution. Alternatively, the sequence can go from red to black (0, 0, 0), as shown, or any level of pure blue.

The color sequence defined by trajectory 62 on color cube 60 has forty-six discrete hues. Each of these hues can be designated by a unique combination of relative intensities of red, green, and blue primary colors. The hue blue has RGB values of (0, 0, 15) which is designated (R,G,B) 1. In a similar manner, hue red is designated (R,G,B) 15, yellow (R,G,B) 31, and white (R,G,B) 46. A hue and brightness correlated color key 52 having these (R,G,B) values is illustrated in Figure 5. As shown in Figure 5, each normalized data intensity value (from the interpolated matrices generated by interpolator 48) is translated to a corresponding (R,G,B) value from key 52. Utilizing this information, color display 54 can display each element of the interpolated matrices as a color representative of the data intensity value thereof.

Although the present invention has been described with reference to preferred embodiments, workers skilled in the art will recognize that changes may be made in form and detail without departing from the spirit and scope of the invention. For example monitor displays other than the described RGB CRT may be employed. Also, color printers based upon various technologies (for example subtractor or CMY primaries) can be used in a similar fashion. However, the characteristics of a RGB CRT are particularly well suited to the present invention, as illustrated in Figure 4, for example. This suitability is enhanced by the fact that blue phosphors often have a "dimmer" output than red phosphors, which contributes to the effect of the display of a in accordance with the present invention.

## Claims

1. A color display apparatus in which a range of data values is associated with a sequence of colors from a color space and individual data values displayed by the associated color, which apparatus is characterized by a sequence of colors having continuous hue and monotonically varying brightness.

2. The color display apparatus of claim 1 wherein the color space is defined by the C.I.E. chromaticity diagram and wherein the colors of the sequence have hues corresponding to hues along a continuous line within the C.I.E. diagram.

3. The color display apparatus of claim 2 wherein the colors of the sequence have hues approximately those along the Black-Body Curve within the C.I.E. Diagram.

4. The color display apparatus of claim 3 wherein the colors of the sequence have hues corresponding to those of the black-body curve, extended toward the origin (X = O, Y = O) of the C.I.E. diagram

5. The color display apparatus of claim 4 wherein the hues of the colors of the sequence include white, yellow, orange, red, purple, and blue.

6. The color display apparatus of claim 5 wherein a minimum value within the range of values is displayed by the hue blue, and a maximum value within the range of values is displayed by the hue white.

7. The color display apparatus of claim 1 wherein the sequence of colors have monotonically varying brightness.

8. The color display apparatus of claim 7 wherein a minimum value within the range of values is displayed by the color having least brightness, and a maximum value within the range of values is displayed by the color having the greatest brightness.

9. The color display apparatus of claim 1 wherein the apparatus is a color video display apparatus.

10. The color display of claim 9 wherein the color video display apparatus is an RGB CRT.

11. The color display apparatus of claim 9 wherein the color video display apparatus topographically maps data values representative of information derived from the human brain.

12. The color display of claim 11 wherein the color video display apparatus is an RGB CRT.

13. The color display apparatus of claim 1 wherein the apparatus is a color printing apparatus.

14. A color topographic display apparatus for generating hue and brightness correlated color topographic displays of information related to the electrical activity of the brain, comprising:

input means for receiving ensembles of data intensity values representative of electrical activity of the brain at spaced-apart locations;

matrix generating means operatively coupled to the input means for generating matrices of elements, the elements of each matrix representing the data intensity values of an ensemble in their proper spatial orientation;

color coding means operatively coupled to the matrix generating means for generating color coded matrices of elements, the elements of each color coded matrix corresponding to the elements of a generated matrix and containing color codes which represent the data intensity values, wherein the colors so enclosed are selected from a sequence of colors from a color space having continuous hues and monotonically varying brightness; and

color display means coupled to the color coding means for providing color displays of the color coded matrices as topographic maps of the brain.

15. The color topographic display apparatus of claim 14 wherein the color coding means causes the elements of the color coded matrices to represent colors from a sequence having hues corresponding to hues along a continuous line within a color space defined by a C.I.E. chromaticity diagram.

16. The color topographic display apparatus of claim 2 wherein the colors of the sequence include hues corresponding to hues generally along the Black-Body curve within the C.I.E. chromaticity diagram.

17. The color topographic display apparatus of claim 16 wherein the colors of the sequence further include hues corresponding to hues generally along said Black-Body curve, extended toward the origin of the C.I.E. diagram.

18. The color topographic display apparatus of claim 14 wherein the color coding means causes the elements of the color coded matrices to represent colors from a sequence having hues corresponding to hues along the Black-Body curve within the C.I.E. chromaticity diagram, extended toward the origin of the diagram.

19. The color topographic display apparatus of claim 14 wherein the color coding means causes the elements of the color coded matrices to represent colors from a sequence of colors including white, yellow, orange, red, purple, and blue hues.

20. The color topographic display apparatus of claim 19 wherein the color coding means causes elements representative of maximum data intensity values to be representative of a white hue, and elements representative of minimum data intensity values to be representative of blue hue.

21. The color topographic display apparatus of claim 14 wherein the color coding means causes the elements of the color coded matrices to represent colors from a sequence of colors having monotonically varying brightness.

22. The color topographic display apparatus of claim 21 wherein the color coding means causes elements representative of minimum data intensity values to be representative of a color from the sequence having least brightness, and elements representative of maximum data intensity values to be representative of a color from the sequence having greatest brightness.

23. The color topographic display apparatus of claim 14 wherein the color display means comprises a color printer.

24. The color topographic display apparatus of claim 14 wherein the color display means comprises a cathode ray tube.

25. The color topographic display apparatus of claim 24 wherein the cathode ray tube has red, green, and blue primary color guns.

26. The color topographic display apparatus of claim 14 and further including normalization means coupled between the input means and the matrix filling means for translating the data intensity values received from the input means to a predetermined range of data intensity values utilized by the color coding means.

27. The color topographic display apparatus of claim 14 and further including interpolation means coupled between the matrix generating means and the color coding means for generating an completed matrix of elements from each generated matrix as a function of selected elements of the generated matrix.

28. The color topographic display apparatus of claim 27 wherein the color coding means causes the elements of the color coded matrices to represent colors from a sequence of colors including white at a first end formed by an equal contribution of the red, green and blue primary colors, followed by yellow formed by decreasing the blue contribution to white, followed by red formed by decreasing the green contribution to yellow, followed by blue at a second end formed by decreasing the red contribution while increasing the blue contribution.

29. The color topographic display apparatus of claim 14 wherein the color coding means causes the elements of the color coded matrices to represent colors from a sequence of colors including white at a first end formed by an equal contribution of the red, green and blue primary colors, followed by yellow formed by decreasing the blue contribution to white, followed by red formed by decreasing the green contribution to yellow, followed by blue at a second end formed by decreasing the red contribution while increasing the blue contribution to red.

1. ILLUMINANT AREA
2. YELLOWISH GREEN
3. YELLOW GREEN
4. GREENISH YELLOW
5. YELLOW
6. YELLOWISH ORANGE
7. ORANGE
8. ORANGE PINK

9. REDDISH ORANGE
10. RED
11. PURPLISH RED
12. PINK
13. PURPLISH PINK
14. RED PURPLE
15. REDDISH PURPLE
16. PURPLE

17. BLUISH PURPLE
18. PURPLISH BLUE
19. BLUE
20. GREENISH BLUE
21. BLUE GREEN
22. BLUISH GREEN
23. GREEN

*Fig 1*

| DATA INTENSITY VALUES | COLOR HUE | COLOR BRIGHTNESS |
|---|---|---|
| 1.0 | WHITE | MAXIMUM |
| .9 | | |
| .8 | YELLOW | |
| .7 | | |
| .6 | ORANGE | |
| .5 | | INTERMEDIATE |
| .4 | RED | |
| .3 | | |
| .2 | PURPLE | |
| .1 | | |
| 0 | BLUE | MINIMUM |

*Fig 2*

Fig 3

Fig 4

Fig 5